# EUROPEAN PATENT SPECIFICATION

(11) **EP 3 237 865 B1**
(45) Date of publication and mention of the grant of the patent: **12.02.2020**
(21) Application number: 15837223.5
(22) Date of filing: 23.12.2015
(51) Int. Cl.: G01L 1/20, G01L 1/18, H01B 1/24

(54) **PIEZORESISTIVE DEVICE**
PIEZORESISTIVE VORRICHTUNG
DISPOSITIF PIÉZORÉSISTIF

(30) Priority: 23.12.2014 GB 201423132
(43) Date of publication of application: 01.11.2017
(73) Proprietor: Haydale Graphene Industries plc, Carmarthenshire South Wales SA18 3BL (GB)
(72) Inventor: DEGANELLO, Davide, Swansea West Glamorgan SA2 8PP (GB); MORTENSEN, Tim, Swansea West Glamorgan SA2 8PP (GB); MOUHAMAD, Youmna, Swansea West Glamorgan SA2 8PP (GB); HOLDER, Alexander, Swansea West Glamorgan SA2 8PP (GB)
(74) Representative: Mewburn Ellis LLP
(86) International application number: PCT/EP2015/081200
(87) International publication number: WO 2016/102689

(56) References cited:
- CN-B- 102 374 910
- US-A1- 2006 147 700
- US-A1- 2008 093 687
- US-B2- 8 661 917

## Description

The present invention relates to piezoresistive devices, and methods of making and using such devices.

### BACKGROUND

Piezoresistive devices find use in a wide-variety of applications, for sensing and quantifying forces.

One type of commercially-available piezoresistive device includes a flexible upper substrate and a lower substrate separated from one another by an air gap created by a spacer. Two interdigitated sets of linear conductive traces are provided on the lower substrate, and a sheet of conductive carbon is provided opposite this on the upper substrate. When pressure is applied to the flexible upper substrate, the substrate deforms so that the conductive layer is brought into contact with a subset of the conductive traces on the lower substrate. As greater pressure is applied, greater numbers of conductive traces contact the conductive layer, and the amount of resistance measured decreases. Thus, the measured resistance can be related to the pressure applied to the upper substrate, due to the relationship between pressure and curvature of the upper substrate.

However, such devices suffer from a number of drawbacks. For example, the device is unable to measure small forces, because the applied force must exceed a certain threshold in order to bring the conductive carbon on the upper layer into contact with the conductive traces, and when contact is first established the resistance immediately drops from infinite resistance. In addition, the performance of such devices is highly dependent on the shape and orientation of the object used to apply the force to the top substrate. Furthermore, for such devices to function effectively the spacer must maintain a suitable air gap between the conductive carbon layer and the conductive traces, increasing the bulk of such devices.

Piezoresistive devices have also been proposed in which upper and lower conducting layers are separated from one another by a piezoresistive material, in which the resistance measured across the piezoresistive material is indicative of the applied force. Advantageously, such devices can be made smaller than the conventional devices described above.

For example, US 4,734,034 describes a sensor, for use in dental diagnostic procedures, formed from a piezoresistive ink sandwiched between upper and lower sets of linear electrodes provided on upper and lower flexible substrates. The piezoresistive ink, which is overprinted on one or both sets of electrodes, includes graphite and titanium dioxide fillers held together with a vinyl resin binder. The upper and lower sets of linear electrodes are overlaid perpendicularly to one another in a grid-like arrangement, so that the resistance measured between a "drive" electrode on one substrate and a "sense" electrode on the other substrate can be related to the force applied at the point where the electrodes overlap.

US 4,856,993, which shares inventors in-common with US 4,734,034, reports that the device described in US 4,734,034 does not accurately discriminate between different degrees of applied force. Accordingly, the inventors propose using an improved resistive ink - a carbon-molybdenum disulphide based ink in an acrylic binder - having more linear resistance-to-force characteristics. However, the inventors report that the use of the improved ink necessitates changes to the construction of the device. Specifically, in order to achieve electrical isolation of the "sensed" electrodes, the piezoresistive ink must not bridge adjacent sensed electrodes. To achieve this, the inventors propose individually coating each electrode on one layer of the device with piezoresistive material, so that the piezoresistive material takes the form of stripes separated by electrically-insulating air gaps. This adds significantly to the complexity of manufacture, particularly for devices with closely-spaced electrodes and sensors covering a large area, largely due to the need to accurately register the piezoresistive stripes with the underlying electrodes. Thus, the use of the improved ink in US 4,856,993 comes at the cost of increased manufacturing complexity.

More recently, alternative carbon-containing piezoresistive ink compositions for use in piezoresistive devices have been proposed. For example, US 8,661,917 describes a piezoresistive ink made by curing a composition containing a conductive carbon material, selected from multi-wall carbon nanotubes, single-wall carbon nanotubes, carbon nanocapsules, graphene, graphite nanoflakes, carbon black and combinations thereof, in specific amounts with specific types of solvent, dispersive agent and unsaturated polyester binder. However, as in US 4,856,993, the device described in US 8,661,917 has the piezoresistive composition printed over the electrodes only, with an air gap between adjacent electrodes on the same substrate to achieve electrical isolation of the electrodes. Other devices are known from US 2008/093687, CN 102 374 910, US 8 661 917 and US 2006/147700.

In view of the above, there remains a need for improved piezoresistive devices which are smaller, cheaper and/or easier to manufacture than existing devices, which show equal or improved sensitivity. As should be clear from the above discussion, achieving this combination of interrelated aims is not straightforward, since improving one characteristic can have a negative impact on another.

### SUMMARY OF THE INVENTION

At its most general, in a first aspect, the present invention provides a piezoresistive device, comprising a piezoresistive material positioned between an upper conductive layer and a lower conductive layer, wherein the piezoresistive material comprises carbon nanoparticles dispersed in a polymer matrix material. Advantageously, the resistance measured between the upper and lower conductive layers is dependent on the force applied to the piezoresistive material, and thus the device can be used to detect and quantify force applied to the device. Suitably, the lower conductive layer is, or is provided on, a lower substrate and the upper conductive layer is, or is provided on, an upper substrate.

The skilled reader recognises that the terms "upper" and "lower" are used merely to distinguish between the two conductive layers (i.e. they are synonymous with "first" and "second"), and are not intended to limit the orientation or spatial configuration of the device.

### Conductive layers

The lower conductive layer comprises or consists of a plurality of conductive traces which are either discrete (i.e. not in electrical contact with one another) or interconnected (i.e. in electrical contact with one another). For example, the lower conductive layer may comprise a pattern (e.g. an array) of conductive traces, such as an array of linear conductive traces (e.g. spaced, parallel lines). Suitably, in such an arrangement, the spacing between the conductive traces of the lower conductive layer is greater than the spacing between the upper and lower conductive layers.

The sensor can be used in two measurement modes.

In the first measurement mode, referred to herein as the "different layer measurement mode", the device is configured to measure the resistance between a conductive trace of the lower conductive layer and the upper conductive layer.

In the second measurement mode, referred to herein as the "same layer measurement mode", the device is configured to measure the resistance between two conductive traces forming the lower conductive layer (i.e. electrodes in the same conductive layer).

In such embodiments, the flow of electrical current does not occur directly between the electrodes, but is instead mediated by the piezoresistive material and the upper conductive layer. More specifically, current from the "drive" electrode flows up through the piezoresistive material, along the upper conductive layer, and back down through the piezoresistive material to the "sense" electrode (i.e. an electron has to flow through the piezoresistive material twice - once "up" and once "down"). Advantageously, this increases the number of passages through piezoresistive material which an electron must make compared to the "different layer measurement mode". Thus, for a device having a given thickness of piezoresistive material, the resistance measured using the "same layer measurement mode" is higher than that measured for the "different layer measurement mode", resulting in improved sensitivity for a given thickness. Furthermore, such an arrangement simplifies the manufacture of the sensor, since the electrical connections of resistance measuring equipment only need to interface with the lower conductive layer.

Optionally, the lower conductive layer comprises two sets of linear conductive traces with are interdigitated with one another (i.e. a first set of interconnected linear conductive traces and a second set of linear interconnected conductive traces, with the first set of conductive traces interdigitated with the second set of conductive traces). In such an embodiment, the first set of conductive traces may form a positive electrode, and the second set of conductive traces may form a negative electrode, which can be used in the "same layer measurement mode". Advantageously, this provides a compact way of achieving a large area between positive and negative electrodes in the same conductive layer. In particular, it allows accurate measurement of different force "footprints" (e.g. forces applied by objects having different sizes and shapes) over a large area, without the measurement being unduly affected by the particular configuration of the electrodes.

Similarly to the lower conductive layer, the upper conductive layer may comprise or consist of a plurality of conductive traces. For example, the upper conductive layer may comprise a pattern (e.g. an array) of conductive traces, which may be discrete (i.e. not in electrical contact with one another) or interconnected (i.e. in electrical contact with one another).

In embodiments in which both the lower conductive layer and upper conductive layer comprise a plurality of conductive traces, the traces of the respective layers may overlay/overlap with one another so as to form a grid-type arrangement. For example, the upper and lower conductive layer may comprise linear conductive traces, with the traces in the upper conductive layer being at an angle (e.g. orthogonal) to those in the lower conductive layer.

In embodiments in which both the lower conductive layer and upper conductive layer comprise or consist of a plurality of discrete conductive traces, the traces of the respective layers preferably overlay/overlap with one another so as to form a grid-type arrangement. Such an arrangement allows the applied force at a specific location of the device to be measured, because the resistance measured between a trace of the upper conductive layer and a trace of the lower conductive layer is determined by the amount of force applied at the point where those traces overlap.

The material of the upper and lower conductive layers is not particularly limited. Suitable materials include metals (such as copper and silver), conductive carbon materials (such as carbon black), and indium tin oxide. For example, one or both of the conductive layers may comprise silver, optionally overlaid with a layer of carbon black.

Suitably, the piezoresistive device further comprises resistance measuring equipment (e.g. an ohmmeter) having positive and negative terminals, wherein one terminal is connected to the lower conductive layer and the other electrode is connected to the upper conductive layer.

Alternatively, the piezoresistive device comprises resistance measuring equipment (e.g. an ohmmeter) having positive and negative terminals, wherein the positive and negative terminals are connected to different (preferably adjacent) conductive traces in the lower conductive layer. Preferably, the lower conductive layer comprises two sets of linear conductive traces which are interdigitated with one another, with the positive terminal of the resistance measuring equiqment connected to one set of traces and the negative terminal connected to the other set of traces. Advantageously, this allows the resistance measuring equiqment to be connected to a single layer of the device, which simplifies manufacture.

### Piezoresistive material

Suitably, the piezoresistive material has a high resistance in the absence of an applied force. For example, in the absence of an applied force, the resistance measured between the lower conductive layer and upper conductive layer may be at least 100 Ω, at least 1 kΩ, at least 5 kΩ, at least 10 kΩ, 50 kΩ, 100 kΩ, at least 500 kΩ, at least 700 kΩ, at least 800 kΩ, at least 1 MΩ, or at least 5 MΩ. For a device having a surface area of "A" cm², the resistance at zero applied force may be, for example, at least 100 Ω/cm², at least 1 kΩ/cm², at least 5 kΩ/cm², at least 10 kΩ/cm², or at least 50 kΩ/cm². Advantageously, ensuring that the resistance at zero applied force is large maximises the dynamic range of the device (i.e. the difference between the largest and smallest possible resistance values) and hence improves the sensitivity of the device.

The piezoresistive material used in the present invention comprises multiple layers. Preferably, the multiple layers contact one another in the absence of an applied force. Advantageously, the flow of current across the interface at which layers of piezoresistive material meet is relatively poor, which increases the overall resistance of the multi-layer structure. Thus, all other things being equal, the resistance of a multilayer structure will be greater than that for a single layer structure. This means that increasing the number of layers in the piezoresistive material allows the overall resistance of the piezoresistive material to be increased without significantly increasing the height of the structure, and allows the resistance of the device to be tuned by adjusting the number of layers.

For the above reasons, the measured resistivity of the deposited piezoresitive material will vary depending inversely on the thickness of layers of piezoresistive material and the number of layers deposited. The resistivity of the piezoresistive material may be, for example, at least 100 Ω/cm, at least 1 kΩ/cm, at least 10 kΩ/cm, at least 100 kΩ/cm, at least 1 MΩ/cm, at least 5 MΩ/cm, or at least 10 MΩ/cm.

The lower limit for the number of piezoresistive layers forming the piezoresistive material may be one. Preferably, the piezoresistive material comprises two to six layers, most preferably three layers, since the inventors have found that this allows a relatively compact high-resistance material to be produced.

As noted above, as the number of piezoresistive layers is increased the overall resistance of the piezoresistive material increases. Therefore, if the number of piezoresistive layers is large, the overall resistance of the piezoresistive material can become too high to reliably form an effective piezoresistive device (since the material effectively becomes an insulator). The exact number of piezoresistive layers which can be tolerated will depend on the composition of each layer, and on the particular application which the device is being used for. However, the upper limit for the number of layers forming the piezoresistive material may be, for example, fifteen, ten, nine, eight, seven or six. The skilled reader understands that the lower and upper limits for the number of layers given above can be combined to form ranges. For example, the piezoresistive material may comprise one to eight, more preferably two to seven, more preferably still, three to six layers. Advantageously, when the piezoresistive material comprises this number of layers it is possible to achieve a suitable level of resistance in a relatively compact manner at relatively low loadings of carbon nanoparticles. In addition, this can be achieved without requiring an excessive number of steps to build up the piezoresistive material.

The composition of each layer may be the same or different. Preferably, all of the piezoresistive layers comprise carbon nanoparticles dispersed in a polymer matrix material. For ease of manufacture, it is preferred that the composition of each of the piezoresistive layers is the same.

The thickness of the piezoresistive material between the upper conductive layer and lower conductive layer (referred to henceforth as "Dv") may be, for example, less than 300 µm, less than 200 µm, less than 150 µm, preferably less than 100 µm or less than 75 µm. The lower limit for the thickness of the piezoresistive material may be, for example 1 µm, 3 µm, 5 µm or 10 µm. Preferably, the thickness of the piezoresistive material between the upper conductive layer and lower conductive layer is 1 to 100 µm, more preferably 1 to 75 µm. In instances where the piezoresistive material is formed from multiple layers, each layer may have a maximum thickness of, for example, 50 µm, 25 µm, 15 µm, 10 µm or 5 µm. The minimum thickness may be, for example, 0.5 µm, 1 µm, 3 µm or 5 µm. Preferably, the thickness of each layer is 1 to 15 µm. Advantageously, such layers provide sufficient resistance whilst allowing a relatively thin device to be produced.

Preferably, the piezoresistive material is applied to the lower conductive layer by overprinting the lower conductive layer with a continuous layer of piezoresistive ink. For example, the ink forms a single block (e.g. it is not printed in stripes).

In embodiments in which the lower and/or upper conductive layer comprises a plurality of conductive traces, such overprinting with piezoresistive ink results in piezoresistive material bridging adjacent conductive traces within the conductive layer (i.e. the piezoresistive material extends from one conductive trace to an adjacent conductive trace in the same conductive layer). Thus, the piezoresistive material coats/fills the region between adjacent conductive traces in the same layer. The same piezoresistive layer bridges adjacent traces in the same conductive layer. Advantageously, it is simpler to produce a device having piezoresistive material bridging adjacent conductive traces than a device in which each conductive trace is individually overlaid with a separate layer of piezoresistive material, because there is no requirement for careful registration between the electrodes and piezoresisitive material. Instead, the piezoresistive material can be provided by printing a continuous layer of piezoresistive ink over the lower conductive layer.

In such embodiments, the piezoresistive material fills the channel between adjacent conductive traces. By "channel between adjacent conductive traces", we mean the volume formed by connecting the opposing surfaces of adjacent conductive traces. More specifically, in embodiments in which the conductive traces are raised features provided on a substrate (e.g. printed traces), the channels occur between the raised traces with the substrate acting as the "base" of the channel and sidewalls of the traces acting as the "sides" of the channel.

The piezoresistive material may fill, for example, 80% or more of the channel between some or all pairs of conductive traces in the same conductive layer. Preferably, the piezoresistive material fills 90% or more of said channels. Most preferably, the piezoresistive material completely fills the channel between all adjacent conductive traces. Advantageously, this means that the layer of piezoresistive material in contact with the conductive traces can be printed over the conductive traces as a single layer. This can be used to produce a single level surface which can be easily overprinted with further material.

Differently stated, the device can be considered to comprise a lower part, having a conductive layer, and an upper part, having a conductive layer, wherein the conductive layer of the lower part overlies the conductive layer of the upper part, and the piezoresistive material fills substantially all (e.g. 80% or more, 85% or more, 90% or more, 98% or more, 99% or more) of the volume between the upper and lower parts in the region where the conductive layers overlie one another. The device may be substantially free of air gaps in the region where the conductive layers overlie one another.

In embodiments in which the upper and/or lower conductive layer is formed of a plurality of conductive traces, the thickness of piezoresistive material between the upper and lower conductive layers ("D_{V}") is less than the thickness of piezoresistive material between adjacent conductive traces in the same layer ("D_{H}"). For example, D_{H} may be at least four times D_{V}, at least six times D_{V}, at least ten times D_{V}, at least twelve times D_{V}, or at least fifteen times D_{V}. Advantageously, higher ratios of Dv:D_{H} mean that the device has low sensitivity to inhomogeneity in the piezoresistive material and manufacturing process. The lower limit for D_{H} may be, for example 50 µm, 100 µm, 200 µm, 250 µm or 300 µm. However, the lower limit for D_{H} is not particularly limited, provided that D_{H} is greater than D_{V}. In embodiments in which both the lower conductive layer and upper conductive layer comprise a plurality of conductive traces, it is preferred that the piezoresistive material bridges adjacent traces in both the lower conductive layer and the upper conductive layer, as well as the gap between the lower conductive layer and upper conductive layer (i.e. that piezoresistive material fills the channel between conductive traces so as to span adjacent traces). This is in contrast to the devices in US 4,856,993 and US 8,661,917 where the piezoresistive material does not extend between adjacent traces (due to the provision of an electrically insulating air gap). The present inventors have found that the devices of the present invention are extremely sensitive and accurate even in the absence of an air gap between adjacent traces. This is particularly surprising since US 4,856,993 reports that inks which allow sensitive discrimination between different levels of applied force (as in the present invention) require isolation of adjacent traces. Advantageously, such a device is relatively compact and simple to manufacture.

It is preferred that all of the layers constituting the piezoresistive material are in contact with one another in the absence of an applied force (i.e. there is no gap between layers). In other words, the layers do not contain an intervening gap filled by an insulating material, such as air. Some, preferably all, of the layers of the piezoresistive material may be bonded together. When the multiple piezoresistive layers are built up by printing piezoresistive ink, the constituents of the layer may be bonded together by the constituents of the ink without the need for a separate adhesive layer.

### Carbon nanoparticles

The piezoresistive material used in the present invention comprises carbon nanoparticles. Suitably, the carbon nanoparticles are conductive particles.

Suitably, the carbon particles have a high aspect ratio. Advantageously, the resistance of the piezoresistive material is particularly sensitive when high aspect ratio particles are used. It is believed that this is due to the fact that the probability of particles forming an electrical connection between two spaced points decreases more rapidly as the distance between the points is increased for particles having a high aspect ratio (due to the influence of the orientation of such particles).

Piezoresistive materials comprising high aspect ratio carbon nanoparticles are particularly useful when used in embodiments where the upper and/or lower conductive layer comprise a plurality of discrete conductive traces, and piezoresistive material fills the gaps between said traces. This is because relatively closely-spaced conductive traces can be effectively electrically isolated from one another without the need for an intervening electrically insulating material, such as air (in contrast to the devices described in US 4,856,993 and US 8,661,917).

The carbon nanoparticles comprise or consist of graphene nanoplatelets. This form of carbon nanoparticles provide extremely high aspect ratio conductive particles.

The carbon nanoparticles comprise graphene platelets (nanoplatelets), preferably having a platelet thickness less than 100 nm and a major dimension (length or width) perpendicular to the thickness. The platelet thickness is preferably less than 70nm, preferably less than 50 nm, preferably less than 30 nm, preferably less than 20 nm, preferably less than 10 nm, preferably less than 5 nm. The major dimension is preferably at least 10 times, more preferably at least 100 times, more preferably at least 1,000 times, more preferably at least 10,000 times the thickness. The length may be at least 1 times, at least 2 times, at least 3 times, at least 5 times or at least 10 times the width.

The loading of carbon nanoparticles in the polymer matrix material may be less than 50 wt.%, less than 40 wt.%, less than 30 wt.%, less than 20 wt.%, less than 15 wt.%, less than 10 wt.%, less than 6 wt.%, less than 5 wt.%, less than 4 wt.%, less than 3 wt.%, less than 2 wt.%, or less than 1 wt.%, and for some uses more preferably less than 0.5 wt.%, less than 0.2 wt.% or less than 0.1 wt.% of the total weight of the piezoresistive material. Conversely, the loading may be at least 0.001 wt.%, at least 0.005 wt.% or at least 0.01 wt.%, and for some uses at least 0.1 wt.%.

It is important that the carbon nanoparticles are uniformly dispersed throughout the polymer matrix material, since aggregates (clumps) of material increase the chances of localised electrical connections forming between conductive layers and decrease the conductivity of the rest of the piezoresistive material (resulting in a less uniform response across the device). It is particularly important to minimise the number of aggregates in embodiments where the upper and/or lower conductive layer comprise a plurality of conductive traces, to minimise the probability of electrical connections occurring between adjacent traces. However, it is not straightforward to achieve a suitably uniform dispersion of graphene nanoplatelets since such particles have a powerful tendency to agglomerate, and are difficult to disperse in solvents and polymer materials. Preferably, the carbon nanoparticles are chemically functionalised carbon nanoparticles. That is, the carbon nanoparticles incorporate functional groups which improve the affinity of the nanoparticles for the solvents and/or polymer matrix material used to form the piezoresistive material, thus allowing a more uniform distribution of particles to be achieved. For example, the carbon nanoparticles are preferably functionalised graphene nanoplatelets.

The inventors have found that when carbon nanoparticles are prepared using agitation in low-pressure plasma, such as described in WO2010/142953 and WO2012/076853, they are readily obtained in a format enabling dispersion in solvents and subsequently in polymer matrices, or directly in polymer melts, at good uniformity and at levels more than adequate for the purposes set out above. This is in contrast to conventional processes for separating and functionalising carbon particles, which are extreme and difficult to control, as well as damaging to the particles themselves.

Specifically, the starting carbon material - especially carbon nanotubes or graphitic carbon bodies - is subjected to a particle treatment method for disaggregating, de-agglomerating, exfoliating, cleaning or functionalising particles, in which the particles for treatment are subject to plasma treatment and agitation in a treatment chamber. Preferably the treatment chamber is a rotating container or drum. Preferably the treatment chamber contains or comprises multiple electrically-conductive solid contact bodies or contact formations, the particles being agitated with said contact bodies or contact formations and in contact with plasma in the treatment chamber.

Preferably the contact bodies are moveable in the treatment chamber. The treatment chamber may be a drum, preferably a rotatable drum, in which a plurality of the contact bodies are tumbled or agitated with the particles to be treated. The wall of the treatment vessel can be conductive and form a counter-electrode to an electrode that extends into an interior space of the treatment chamber.

During the treatment, desirably glow plasma forms on the surfaces of the contact bodies or contact formations.

Suitable contact bodies are metal balls or metal-coated balls. The contact bodies or contact formations may be shaped to have a diameter, and the diameter is desirably at least 1 mm and not more than 60 mm.

The pressure in the treatment vessel is usually less than 500 Pa. Desirably during the treatment, gas is fed to the treatment chamber and gas is removed from the treatment chamber through a filter. That is to say, it is fed through to maintain chemical composition if necessary and/or to avoid build-up of contamination.

The treated material, that is, the particles or disaggregated, deagglomerated or exfoliated components thereof resulting from the treatment, may be chemically functionalised by components of the plasma-forming gas, forming e.g. carboxy, carbonyl, OH, amine, amide or halogen functionalities on their surfaces. Plasma-forming gas in the treatment chamber may be or comprise e.g. any of oxygen, water, hydrogen peroxide, alcohol, nitrogen, ammonia, amino-bearing organic compound, halogen such as fluorine, halohydrocarbon such as CF₄, and noble gas. Oxygen-functionalised materials, plasma-processed in oxygen, or oxygen-containing gas, are particularly preferred.

Any other treatment conditions disclosed in the above-mentioned WO specifications may be used, additionally or alternatively. Or, other means of functionalising and/or disaggregating carbon particles may be used for the present processes and materials, although we strongly prefer plasma-treated materials.

For the present purposes the type and degree of chemical functionalisation of the particles is selected for effective compatibility at the intended loadings with the selected polymer matrix material. Routine experiments may be effective to determine this.

### Polymer matrix material

Suitably, the polymer matrix material is an elastic material. The particular choice of elastic material is not particularly limited, provided that it is sufficiently elastically deformable at the required measurement conditions (pressure and temperature), and holds the carbon particles in position (so that the distribution of carbon particles does not change over time). Suitable materials include, for example, vinyl polymers (including polymers or copolymers of vinyl chloride, vinyl acetate and vinyl alcohol), polyester polymers, phenoxy polymers, epoxy polymers, acrylic polymers, polyamide polymers, polypropylenes, polyethylenes, silicones, elastomers such as natural and synthetic rubbers including styrene-butadiene copolymer, polychloroprene (neoprene), nitrile rubber, butyl rubber, polysulfide rubber, cis-1,4-polyisoprene, ethylene-propylene terpolymers (EPDM rubber), and polyurethane rubber. The polymer matrix material may be, for example, a copolymer of vinyl chloride, vinyl acetate and/or vinyl alcohol.

### Substrate

Suitably, the upper conductive layer is provided on an upper substrate and the lower conductive layer is provided on a lower substrate. Preferably, at least one of the substrates is relatively flexible. The degree of flexibility required will depend on the particular application which the sensor is intended for use in. For example, for applications where it is necessary to specifically localise the position at which a force is applied to the substrate, a relatively flexible substrate may be used. In contrast, when the exact position of the force is unimportant, a relatively more rigid substrate may be suitable.

Suitable materials for the substrate include, for example, polymers (such as PET), glass, fabrics, metals and composite materials such as fiberglass.

### Preferred embodiments

In a particularly preferred embodiment, the present invention provides a piezoresistive device comprising a piezoresistive material positioned between an upper conductive layer and a lower conductive layer, wherein the piezoresistive material comprises 50 wt.% or less carbon nanoparticles comprising graphene nanoplatelets dispersed in a polymer matrix material (the weight percentage being relative to the total weight of the piezoresistive material).

In another particularly preferred embodiment, the present invention provides a piezoresistive device comprising:
- a lower substrate, having a conductive layer ("lower conductive layer");
- an upper substrate, having a conductive layer ("upper conductive layer"); and
- a piezoresistive material positioned between the upper and lower substrate,
wherein the piezoresistive material comprises carbon nanoparticles (graphene nanoplatelets) dispersed in a polymer matrix material, and
wherein conductive layers on the lower and upper substrate overlay one another, and the piezoresistive material fills substantially all of the volume between the upper and lower substrates in the region where the conductive layers overlie one another. Advantageously, such a device allows particularly sensitive measurement of applied force and is relatively simple to manufacture (as explained above).

In another particularly preferred embodiment, the present invention provides a piezoresistive device comprising a piezoresistive material positioned between an upper conductive layer and a lower conductive layer, wherein the piezoresistive material comprises carbon nanoparticles comprising graphene nanoplatelets dispersed in a polymer matrix material, and wherein the upper and lower conductive layers each comprise a plurality of spaced conductive traces with piezoresistive material filling the channel between conductive traces on both the upper and lower conductive layers. Advantageously, such a device is relatively simple to manufacture because the upper and lower parts of the device can be identical, and hence it is possible to form the device from a single type of sheet produced by printing a repeating pattern of conductive traces on a substrate and completely overlaying the conductive traces with piezoresistive material. This is in contrast to the device in US 4,856,993 and US 8,661,917 where the piezoresistive material must be in registration with the conductive traces and, in the case of US 4,856,993, where the upper and lower parts of the device are different.

These preferred embodiments may have any of the optional and preferred features discussed above.

### Applications

Advantageously, the high sensitivity, large dynamic range (in terms of the range of forces which can be measured) and small size of the piezoresistive device of the present application mean it is suitable for use in a wide range of applications. In particular, a single embodiment of the device is particularly versatile, unlike the "conventional" device described in the background section above where devices must be carefully tailored to a specific application (e.g. tailoring the "threshold force" required, and adapting the device to the particular shape and orientation of the object being measured).

For example, the device may find use as a pressure sensor. Suitable applications for such a sensor may be found in a range of areas including sports (e.g. jump height testing), medicine (e.g. gait analysis), dentistry (e.g. dental occlusion measurement), retail (e.g. footfall analysis in a shop), packaging, furniture and clothing. In addition, the device may find use as a strain gauge. Suitable applications for such a strain gauge may include, for example, detection of distortions in pipes.

### Manufacturing method

In a further aspect, the present invention provides a method of manufacturing a piezoresistive device according to claim 11.

Preferably, the layers of piezoresistive material are all deposited as continuous layers (so that piezoresistive material fills the channel between conductive traces).

As explained above, depositing a continuous layer of piezoresistive material over several traces is simpler than depositing stripes of material. In addition, when all layers of piezoresistive material are deposited as continuous layers, the deposition can be repeated without requiring process changes between each layer (e.g. changes in the pattern of deposited material).

More preferably, the first conductive layer comprises a first set of interconnected linear conductive traces and a second set of interconnected linear conductive traces, and the traces of the first and second set of traces are interdigitated. Advantageously, such a device can be operated both in the "different layer measurement mode" and the "same layer measurement mode" described above.

The step of providing a first conductive layer (step (i) above) may involve depositing a conductive ink on a substrate. Suitable printing techniques include, for example, screen printing, flexography, rotogravure, inkjet, and offset lithography.

Suitably, the step of depositing the layers of piezoresistive material (step (ii) above) involves printing more layers of a piezoresistive ink. Suitable printing techniques include, for example, screen printing, flexography, rotogravure, inkjet, and offset lithography. The piezoresistive ink comprises the carbon nanoparticles dispersed in a solvent and polymer matrix material.

Each layer is dried before a subsequent layer is added. The device may be heated after the application of each piezoresistive ink layer to speed up drying of the ink.

When using a piezoresistive ink, the method preferably involves a step of preparing the ink for printing. This preparation step may involve mixing or homogenising the ink to evenly distribute the carbon nanoparticles in the ink's polymer binder. Preferably, the preparation step involves homogenising the ink, since the inventors have found that this ensures a uniform distribution of carbon nanoparticles and can help to break up agglomerates of nanoparticles in the ink. This homogenisation is particularly useful in embodiments in which the first and/or second conductive layers comprise or consist of a plurality of conductive traces, and the conductive layers are overprinted with a continuous layer of piezoresistive ink which bridge the gaps between adjacent traces, because the homogenisation helps to ensure that the lateral resistance (i.e. the resistance between adjacent traces) remains high and uniform through the device. Suitable homogenisation can be achieved using, for example, a three roll-mill or rotor-stator homogeniser.

Suitably, the step of bringing a second conductive layer into contact with the piezoresistive material (step (iii)) involves overlaying a second substrate, having the second conductive layer, onto the first substrate.

The first conductive layer may be identical to the second conductive layer. For example, the device can be created by:
- preparing a lower part by providing a conductive layer and depositing one or more layers of piezoresistive material, as defined above, over the conductive layer; and
- bringing an upper part into contact with the lower part, wherein the upper part is identical to the lower part.

Advantageously, this simplifies construction of the device, since it requires only a single type of substrate to be produced. For example, both parts of the device can be obtained by dividing (e.g. cutting) a single multilayer structure.

The piezoresistive device produced using methods of the present invention may have any of the preferred and optional features referred to above.

### Methods of operating a sensor device

In another aspect, the present invention provides a method of using a pressure sensor of the first aspect, as defined above. For example, the present invention provides a method of using a pressure sensor of the first aspect according to the "same layer measurement mode" described above.

### BRIEF DESCRIPTION OF THE FIGURES

Embodiments of the invention will now be described, by way of example only, with reference to the accompanying drawings in which:
Figure 1A shows a conventional commercially available piezoresistive pressure sensor;
Figure 1B shows the behaviour of the sensor shown in Figure 1A upon application of a force;
Figure 2 is a cross-sectional view of a known piezoresistive pressure sensor described in US 4,856,993;
Figure 3 shows a top view of the electrode arrangement for the device of Figure 2;
Figure 4 is a cross-sectional view of a piezoresistive device of the present invention set up for measurement according to the "different layer measurement mode" described above;
Figure 5 is a cross-sectional view of a piezoresistive device of the present invention set up for measurement according to the "same layer measurement mode" described above;
Figure 6 is a top view of the lower electrode arrangement of the device of Figure 5;
Figure 7 is a bottom view showing the lower electrodes overlaying the upper electrodes in the device of Figure 5;
Figure 8 is a schematic diagram showing the flow of current in the device of Figure 5;
Figure 9 is a logarithmic plot showing measured resistance vs applied force for a device according to the present invention, having a single upper and lower conductive layer and six piezoresistive layers;
Figure 10 is a plot showing the effect of the number of layers of piezoresistive ink on measured resistance;
Figures 11 and 12 are logarithmic plots showing measured resistance vs applied force for devices incorporating piezoresisitve ink with different loadings of carbon nanoparticles. The device in Figure 11 had a higher loading than that in Figure 12; and
Figure 13 is a logarithmic plot showing measured resistance vs applied force for a device having the configuration shown in Figure 5, having four layers of piezoresistive ink.

### DETAILED DESCRIPTION

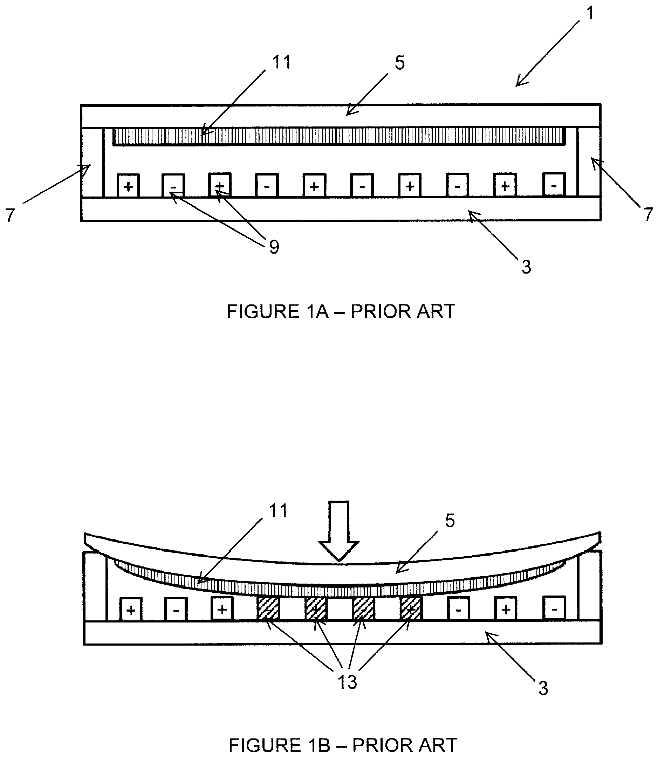

Figure 1A shows a conventional commercially-available sensor 1, consisting of a lower substrate 3 and flexible upper substrate 5 separated by an air gap created by a ring-shaped spacer 7. The lower substrate includes interdigitated positive and negative electrodes 9, positioned opposite to a conductive layer 11 on the upper substrate. The electrodes of the same polarity are interconnected, and terminate in a common terminal (not shown). As shown in Figure 1B, when a force is applied to upper substrate 5, the substrate deforms so as to bring the conductive layer 11 into contact with a subset 13 of the electrodes 9. This allows current to flow between positive and negative electrodes via the conductive layer 11. The overall resistance measured between the positive terminal and negative terminal depends on the number of electrodes in contact with the conductive layer. Thus, the measured resistance can be related to the deformation of the upper substrate, which will depend on the applied force.

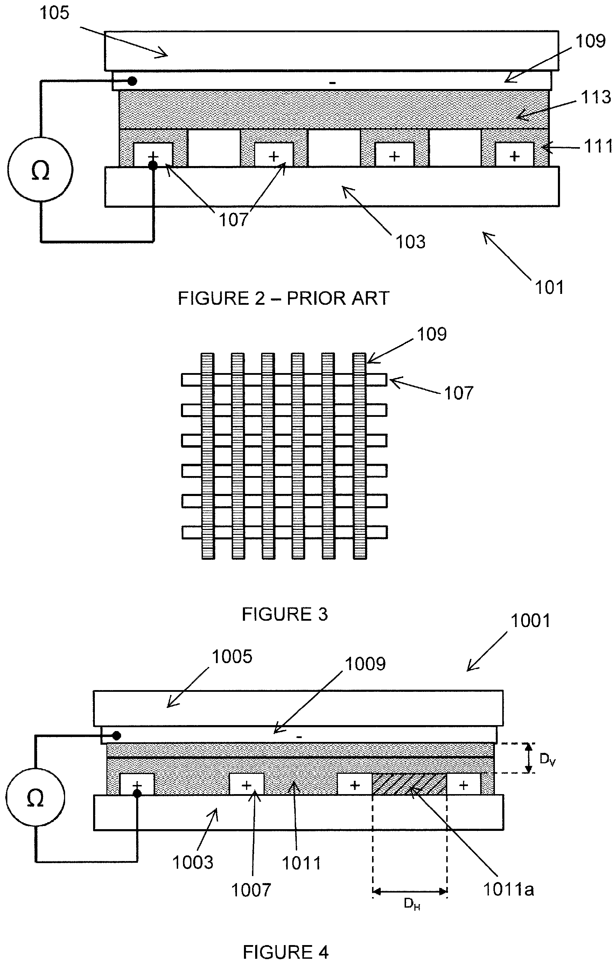

Figure 2 shows another prior art sensor 101, as described in US 4,856,993. Sensor 101 comprises a lower substrate 103 and upper substrate 105 each bearing conductive traces 107 and 109 separated by layers of piezoresistive material 111 and 113. The conductive traces of the upper and lower substrates overlay one another so as to form a grid arrangement, as shown in Figure 3. The piezoresistive material comprises carbon-molybdenum disulphide in an acrylic binder. Resistance is measured between "drive" trace 109 and one of the "sensed" traces 107. However, to produce a functioning device with this material it is necessary for adjacent "sensed" traces to be electrically isolated from one another. Thus, resistive material 111 takes the form of individual stripes separated by an air gap.

Figures 4 to 7 show piezoresistive devices according to the present invention. Figure 4 shows a piezoresistive sensor 1001, consisting of a lower substrate 1003 and upper substrate 1005 each bearing discrete silver traces 1007 and 1009 (again, a single trace is shown, in cross section, for the upper substrate) separated by layers of piezoresistive material 1011 and 1013. The distance between silver traces in the same layer D_{H} is greater than the distance between conductive traces in different layers Dv (although, note that the device in Figure 4 is not to scale).

In contrast to the prior art device of Figure 2, the piezoresistive material of the device in Figure 4 includes high aspect ratio carbon nanoparticles, in this case 5 wt.% functionalised graphene nanoplatelets in a vinyl polymer matrix. The use of this particular material in the context of the device having D_{H} greater than D_{V} means that adjacent conductive traces are effectively electrically isolated from one another without an intervening insulating material (e.g. air). Thus, piezoresistive ink layers 1011 and 1013 are completely overprinted on both the upper and lower substrates, meaning that the ink fills the channel between adjacent silver traces (illustrated for the lower layer by cross-hatched region 1011a). This makes the device particularly simple to manufacture, since the upper and lower parts of the device can be manufactured in the same way. For example, a single starting substrate can be overprinted with silver traces and one or more layers of the piezoresistive ink, and subsequently cut in half and overlaid to form the device shown in Figure 4.

Similarly to the device shown in Figure 2, the pressure across the device in Figure 4 can be determined by measuring the resistance between a silver trace 1007 on the lower substrate and a silver trace 1009 on the upper substrate.

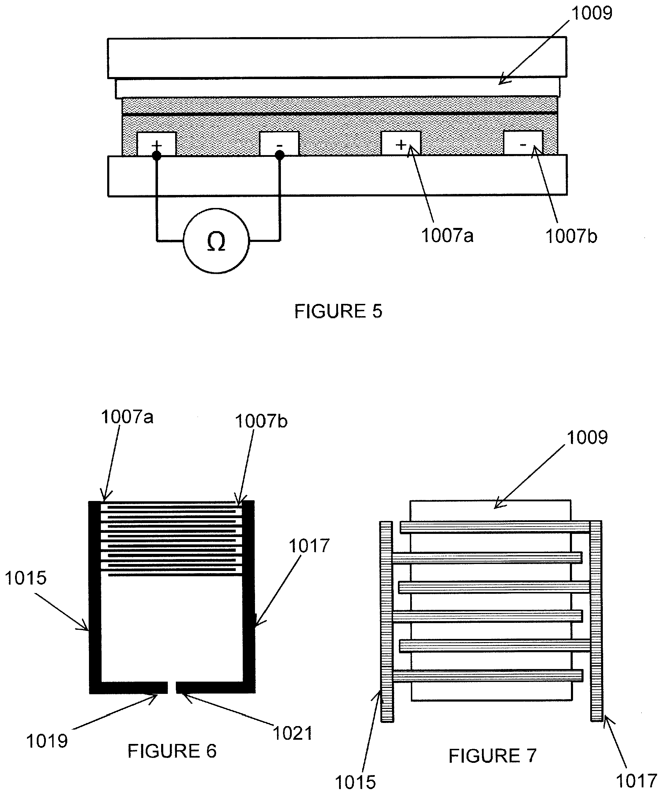

The device in Figure 5 is similar to that shown in Figure 4, but in this case the resistance is measured between adjacent silver traces on the same substrate. In the device of Figure 5, the lower substrate has two electrodes - positive electrode 1015 and negative electrode 1017 - as shown in Figure 6. The positive electrode is formed from interconnected linear conductive traces 1007a having a common positive terminal 1019. The negative electrode has a similar arrangement of silver traces 1007b and terminates in a negative terminal 1021, with the silver traces of the negative electrode interdigitating and alternating with those of the positive electrode. In this embodiment, the upper substrate has a single silver layer 1009 overlying all of the conductive traces of the lower substrate (as shown in Figure 7). However, the form of the silver layer 1009 is not limited in this embodiment, provided that the layer overlays the silver traces 1007a and 1007b of the positive and negative electrodes, and could take the form of rows of silver traces (e.g. as shown in Figure 3) or any other regular or irregular pattern.

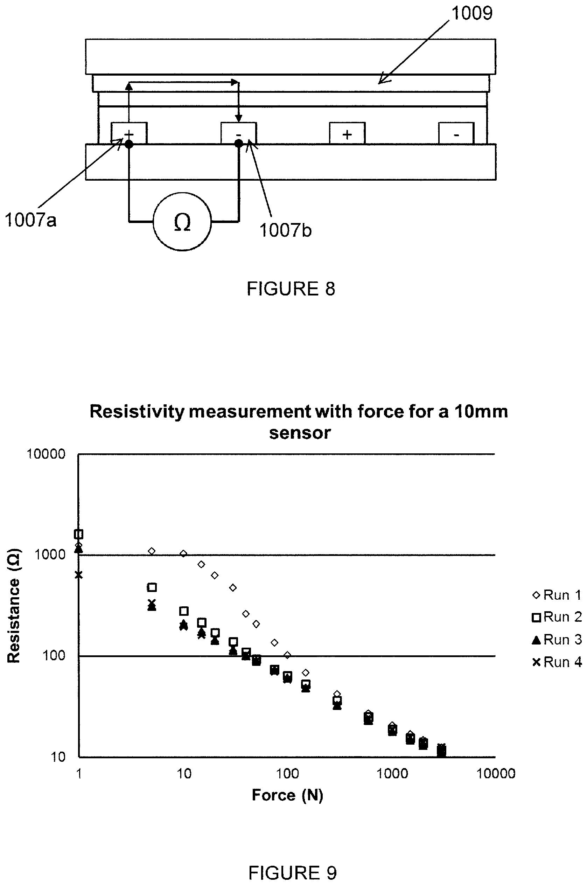

In this device, resistance is measured between the positive terminal 1019 and negative terminal 1021. Electron flow between adjacent electrodes occurs via the silver layer 1009, with direct current flow between adjacent conductive traces being negligible (or even prevented) due to the use of the high aspect ratio carbon nanoparticle-based ink and the spacing of the traces. More specifically, as shown in Figure 8, electrons flow between adjacent traces by flowing "up" through the piezoresistive material, across the silver layer 1009 and "down" through the piezoresistive material. Advantageously, this means that electrons must travel through a longer path of piezoresistive material in the device of Figure 5 compared to the device of Figure 4, meaning the resistance values measured in Figure 5 are higher than those for Figure 4 (all other things being equal). Since a higher starting resistance helps to improve the dynamic range of the device, this increased electron path length helps to improve sensitivity without increasing height.

### EXPERIMENTAL RESULTS

### Example 1

A piezoresitive device was produced and measured according to the different layer measurement mode described above, in order to assess the piezoresistive properties of a high aspect ratio carbon nanoparticle ink.

Two 10 mm by 9 cm strips of a conductive silver ink (AG 500, Conductive Compounds PE) were screen printed onto a PET substrate (175 µm thickness) using a DEK 248 screen printer. Each strip was then overprinted with three layers of piezoresistive ink containing carbon nanoparticles including functionalised GNPs (Haydale Graphene Industries pic) in a polymer matrix and solvent, whilst leaving a small area of the conductive silver exposed at one end. Each piezoresistive ink layer was dried before the application of subsequent ink layers. The assembly was then cut in half (each bearing a silver strip), and the two halves overlaid with the piezoresistive ink layers facing one another, so as to form a piezoresistive sensor.

To measure the resistance behaviour of the device, a multimeter (Agilent RMS) was attached to the exposed silver on each half of the device, and pressures of between 1 and 3000 N were applied using a Housfield extensometer. To achieve an even distribution of force, the sensor was attached to flat acrylic blocks and a spacer with the same area as the active sensor area was placed on top of the acrylic block. Measurements were repeated four times.

The results of these experiments are shown in Figure 9. As is clear from Figure 9, the results for the second, third and fourth run are in excellent agreement, but differ from those obtained for the first run. It is believed that this could be due to irreversible physical changes occurring within the sensor the first time force is applied. In this regard, it is interesting to note that after a force of 2000 N is applied the measured resistance for run 1 falls into agreement with that of runs 2 to 4. This suggests that, in this case, a force of at least 2000 N is required to achieve the irreversible physical changes which occur between 1 and 3000 N.

It is noted that there is a slight divergence in the measured resistance values for runs two, three and four at forces below around 40 N - this is probably due to artefacts caused by the extensometer since forces lower than 50N are close to instrument limits (hence there is an increased instrument error in this range).

The large dynamic range, repeatability, and interpolatable nature of the pressure response of the device means that it is particularly well-suited to use as a sensitive pressure sensor. In particular, the sensor appears to work effectively at high pressures, in contrast to prior art pressure sensors based on piezoresistive carbon-based inks where resistance plateaus at relatively low pressures.

### Example 2

Experiments broadly following a similar protocol to that described for Example 1 were carried out using piezoresistive ink containing carbon nanoparticles including functionalised GNPs in a vinyl chloride copolymer based binder.

In this case silver traces of 20 mm width, 150 mm length and ∼8 µm height were screen printed with a 54/64 mesh onto a 330 µm thick PET substrate using a DEK 248 screen printer. Three layers of piezoresistive ink were printed as continuous blocks over the silver traces using a 54/64 mesh to give a total height of ∼ 9 µm. A piezoresistive device was then formed following the same approach as in Example 1, and the resistance measured over a circular area with a diameter 15 mm (1.77 cm² area of compression). Three different devices were produced having "high", "medium" and "low" loadings of carbon nanoparticles in the piezoresistive material. The devices having medium and low loadings had four and eight times less carbon than the high loading respectively.

The device made using the piezoresistive material with high carbon nanoparticle loading displayed resistances of less than 1 Ω at all applied pressures, demonstrating that this ink is not piezoresistive and hence not suitable for measuring applied pressures. In contrast, devices produced using piezoresistive materials having medium and low loadings of carbon nanoparticles showed a repeatable and interpolatable variation in measured resistance with applied pressure, and a suitably high resistance at zero applied force to be useful pressure sensors. The device having low carbon nanoparticle loading performed better than the device having medium carbon nanoparticle loading.

### Example 3

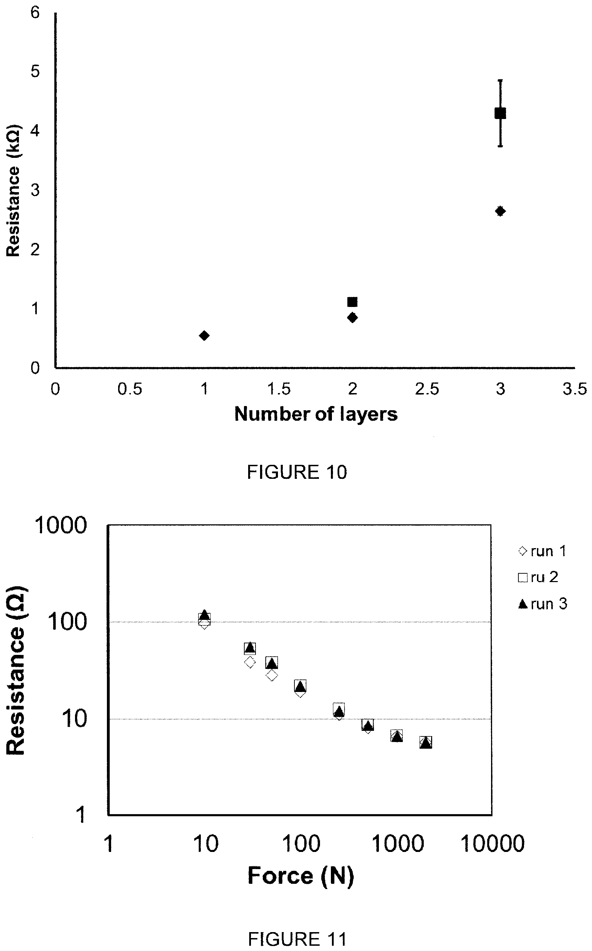

Experiments were carried out to determine the effect of increasing the number of layers of piezoresistive ink on resistance, with results shown in Figure 10.

A series of lower substrates were produced by screen printing an indium tin oxide sheet with one, two or three layers of a piezoresistive ink containing 3.5 wt.% functionalised graphene nanoplatelets (with negligible content of other types of carbon particle) dispersed in vinyl chloride copolymer based binder and solvent (15 parts binder to 85 parts solvent). The dried ink had a GNP content of ∼20 wt.%. Piezoresistive devices were formed by combining the lower substrates with an upper substrate, consisting of a further indium tin oxide sheet optionally bearing a single layer of the same piezoresistive ink as the lower substrate. The resistance of these devices under an applied pressure of 2000 N was measured using a Housfield extensometer with a circular area of compression of 1.77 cm² (diameter 15 mm)

As can be seen in the results shown in Figure 10, the resistance of the devices increased with the number of layers, and the devices having a piezoresistive ink layer on the upper substrate (the square data points in Figure 10) had a higher resistance than those lacking a layer of piezoresistive ink (the diamond data points in Figure 10 - i.e. devices in which the upper substrate did not have a piezoresisitve layer deposited on the silver).

The resistance values measured in these tests were particularly high. It is thought that this is due to the use of inks incorporating low loadings of functionalised GNPs with negligble content of other carbon particles.

### Example 4

A piezosensitive device was produced and measured according to the "same layer measurement mode". In this example, a lower substrate was produced by overprinting a PET sheet (330 µm thickess) with interdigitated silver positive and negative electrodes having the pattern shown in Figure 6. The silver traces were printed using a 100/34 mesh, to produce interconnected linear traces of width ∼600 µm wide, length ∼15 mm and height ∼ 7 µm, with a separation of ∼ 400 µm between adjacent traces of the positive and negative electrodes.

An upper substrate was produced by screen printing a continuous sheet of silver (15 mm length, 16 mm width, ∼ 8 µm height) on a further PET substrate using a 54/64 mesh, and subsequently coating this with two continuous layers of a piezoresistive ink containing carbon nanoparticles including functionalised GNPs in a liquid medium containing 15:85 vinyl chloride copolymer based binder:solvent (corresponding to the "low" loading ink from Example 2). A piezoresistive device was created by bringing the electrodes of the lower substrate into contact with the piezoresistive ink of the upper substrate.

A second device incorporating three layers of piezoresistive on the upper substrate was produced following the same procedure described above.

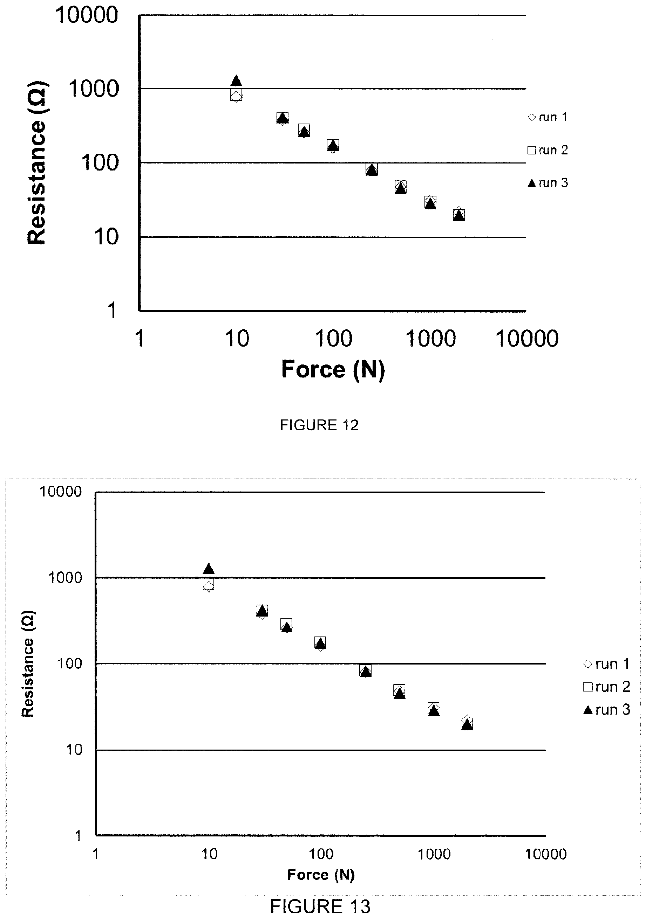

The resistance of the devices was then measured by measuring the resistance between the positive and negative electrodes on the lower substrate. The results of measurements for the two layer and three layer devices are shown in Figures 11 and 12 respectively.

### Example 5

A further piezoresistive device was produced and measured according to the "same layer measurement mode". In this example, a lower substrate was produced by overprinting a PET sheet with interdigitated silver positive and negative electrodes following the method described in Example 4, and subsequently coating this with two continuous layers of a piezoresistive ink containing carbon nanoparticles including functionalised GNPs in a liquid medium containing 15:85 vinyl chloride copolymer based binder:solvent (corresponding to the "low" loading ink from Example 2) using a 100/34 mesh to give a piezoresistive material of height ∼ 4 µm. The resistance between the positive and negative electrodes was measured and found to be 220 kQ in the absence of an applied force.

An upper substrate was produced by screen printing a silver electrode on a further PET sheet, and subsequently coating this with two layers of the same piezoresistive ink used for the lower substrate. A piezoresistive device was created by bringing the piezoresistive ink layers of the lower substrate into contact with the piezoresistive ink of the upper substrate. Resistance between the positive and negative electrodes was measured under varying applied forces, producing the results shown in Figure 13.

The resistance of the lower substrate in the absence of the upper substrate was significantly greater than that measured for the device incorporating the upper substrate. This difference is such that the contribution of electron flow directly between adjacent conductive traces (i.e. not mediated by the upper conductive layer) is negligible in the piezoresistive device incorporating the upper and lower substrates.

In respect of numerical ranges disclosed in the present description it will of course be understood that in the normal way the technical criterion for the upper limit is different from the technical criterion for the lower limit, i.e. the upper and lower limits are intrinsically distinct proposals.

For the avoidance of doubt it is confirmed that in the general description above, in the usual way the proposal of general preferences and options in respect of different features of the piezoresistive device and methods described above constitutes the proposal of general combinations of those general preferences and options for the different features, insofar as they are combinable and compatible and are put forward in the same context.

## Claims

1. A piezoresistive device, comprising a piezoresistive material positioned between an upper conductive layer and a lower conductive layer, wherein:
the lower conductive layer comprises a plurality of conductive traces; and
the piezoresistive material comprises carbon nanoparticles dispersed in a polymer matrix material;
**characterised in that** the piezoresistive material comprises multiple layers and a single layer of said multiple layers bridges adjacent conductive traces within the lower conductive layer and;
the carbon nanoparticles comprise graphene nanoplatelets.

2. A piezoresistive device according to claim 1, wherein the conductive traces are raised features provided on a substrate, with intervening channels between said raised features, and wherein the piezoresistive material fills said channels.

3. A piezoresistive device according to any one of claims 1 to 2, wherein the upper conductive layer comprises a plurality of conductive traces, and the piezoresistive material bridges adjacent traces in both the lower conductive layer and the upper conductive layer, as well as the gap between the lower conductive layer and upper conductive layer.

4. A piezoresistive device according to claim 3, wherein the thickness of piezoresistive material between the upper and lower conductive layers is less than the thickness of piezoresistive material between adjacent conductive traces in the upper conductive layer.

5. A piezoresistive device according to any one of claims 1 to 4, wherein the lower conductive layer comprises two sets of linear conductive traces which are interdigitated with one another.

6. A piezoresistive device according to any one of claims 1 to 5. wherein either:
(i) the device further comprises resistance measuring equipment having positive and negative terminals, wherein the positive and negative terminals are connected to different conductive traces in the lower layer.
(ii) the carbon nanoparticles are functionalised carbon nanoparticles; and/or
(iii) the loading of carbon nanoparticles in the polymer matrix material is less than 50 wt.%, preferably less than 20 wt.%, as a percentage of the total weight of the piezoresistive material.

7. A piezoresistive device according to any one of the preceding claims, wherein the piezoresistive material comprises three to six layers.

8. A piezoresistive device according to any one of the preceding claims, wherein the thickness of the piezoresistive material between the upper conductive layer and lower conductive layer is less than 300 µm.

9. A piezoresistive device according to claim 1, comprising:
- a lower substrate, comprising said lower conductive layer;
- an upper substrate, comprising said upper conductive layer; and
- said piezoresistive material positioned between the upper and lower substrate,
wherein the piezoresistive material comprises the carbon nanoparticles dispersed in the polymer matrix material, and
wherein said conductive layers on the lower and upper substrate overlay one another, and the piezoresistive material fills substantially all of the volume between the upper and lower substrates in the region where the conductive layers overlie one another.

10. A force sensor, comprising a piezoresistive device according to any one of the preceding claims.

11. A method of manufacturing a piezoresistive device according to any one of claims 1 to 9, comprising:
(i) providing a first conductive layer comprising a plurality of conductive traces;
(ii) depositing a piezoresistive material, comprising carbon nanoparticles dispersed in a polymer matrix material, over the first conductive layer; and
(iii) bringing a second conductive layer into contact with the piezoresistive material;
**characterised in that** the piezoresistive material comprises multiple layers of piezoresistive material and a single layer of said multiple layers bridges adjacent conductive traces within the first conductive layer and;
the carbon nanoparticles comprise graphene nanoplatelets.

12. A method according to claim 11, wherein the step of depositing multiple layers of piezoresistive material involves printing one or more layers of a piezoresistive ink.

13. A method according to claim 11, wherein:
(i) the first conductive layer comprises a first set of interconnected linear conductive traces and a second set of interconnected linear conductive traces, and the traces of the first and second set of traces are interdigitated; and/or.
(ii) the step of providing a first conductive layer involves depositing a conductive ink on a substrate; and/or
(iii) the step of bringing a second conductive layer into contact with the piezoresistive material involves overlaying a second substrate, having the second conductive layer, onto the first substrate; and/or
(iv) the method comprises:
- preparing a lower part by providing a conductive layer and depositing one or more layers of said piezoresistive material over the conductive layer; and
- bringing an upper part into contact with the lower part, wherein the upper part is identical to the lower part.

## Patentansprüche

1. Piezoresistive Vorrichtung, umfassend ein piezoresistives Material, das zwischen einer oberen leitfähigen Schicht und einer unteren leitfähigen Schicht angeordnet ist, wobei:
die untere leitfähige Schicht eine Vielzahl von Leiterbahnen umfasst; und
das piezoresistive Material Kohlenstoffnanoteilchen umfasst, die in einem Polymer-Matrixmaterial dispergiert sind;
**dadurch gekennzeichnet, dass** das piezoresistive Material mehrere Schichten umfasst, und eine einzelne Schicht aus den mehreren Schichten Leiterbahnen innerhalb der unteren leitfähigen Schicht überbrückt und;
die Kohlenstoffnanoteilchen Graphen-Nanoplättchen umfassen.

2. Piezoresistive Vorrichtung nach Anspruch 1, wobei die Leiterbahnen erhabene Elemente mit dazwischen verlaufenden Kanälen zwischen den erhabenen Elementen sind, die auf einem Substrat bereitgestellt sind, und wobei das piezoresistive Material die Kanäle füllt.

3. Piezoresistive Vorrichtung nach einem der Ansprüche 1 bis 2, wobei die obere leitfähige Schicht eine Vielzahl von Leiterbahnen umfasst, und das piezoresistive Material benachbarte Leiterbahnen in der unteren leitfähigen Schicht sowie in der oberen leitfähigen Schicht sowie den Zwischenraum zwischen der unteren leitfähigen Schicht und der oberen leitfähigen Schicht überbrückt.

4. Piezoresistive Vorrichtung nach Anspruch 3, wobei die Dicke des piezoresistiven Materials zwischen der oberen und der unteren leitfähigen Schicht kleiner ist als die Dicke des piezoresistiven Materials zwischen benachbarten Leiterbahnen in der oberen leitfähigen Schicht.

5. Piezoresistive Vorrichtung nach einem der Ansprüche 1 bis 4, wobei die untere leitfähige Schicht zwei Sätze aus linearen Leiterbahnen umfasst, die fingerartig ineinandergreifen.

6. Piezoresistive Vorrichtung nach einem der Ansprüche 1 bis 5, wobei entweder:
(i) die Vorrichtung ferner Widerstandsmessvorrichtungen mit positiven und negativen Anschlüssen umfasst, wobei die positiven und negativen Anschlüsse mit verschiedenen Leiterbahnen in der unteren Schicht verbunden sind;
(ii) die Kohlenstoffnanoteilchen funktionalisierte Kohlenstoffnanoteilchen sind; und/oder
(iii) die Beladung von Kohlenstoffnanoteilchen in dem Polymer-Matrixmaterial geringer ist als 50 Gew.-%, vorzugsweise geringer als 20 Gew.-%, bezogen auf das Gesamtgewicht des piezoresistiven Materials.

7. Piezoresistive Vorrichtung nach einem der vorangegangenen Ansprüche, wobei das piezoresistive Material drei bis sechs Schichten umfasst.

8. Piezoresistive Vorrichtung nach einem der vorangegangenen Ansprüche, wobei die Dicke des piezoresistiven Materials zwischen der oberen leitfähigen Schicht und der unteren leitfähigen Schicht weniger als 300 µm beträgt.

9. Piezoresistive Vorrichtung nach Anspruch 1, die Folgendes umfasst:
- ein unteres Substrat, das die untere leitfähige Schicht umfasst;
- ein oberes Substrat, das die obere leitfähige Schicht umfasst; und
- das piezoresistive Material, das zwischen dem oberen und unteren Substrat angeordnet ist,
wobei das piezoresistive Material die in dem Polymer-Matrixmaterial dispergierten Kohlenstoffnanoteilchen umfasst, und
wobei die leitfähigen Schichten auf dem oberen und unteren Substrat einander überlagern und das piezoresistive Material im Wesentlichen das gesamte Volumen zwischen dem oberen und unteren Substrat in der Region füllt, in der die leitfähigen Schichten einander überlagern.

10. Kraftsensor, der eine piezoresistive Vorrichtung nach einem der vorangegangenen Ansprüche umfasst.

11. Verfahren zur Herstellung einer piezoresistiven Vorrichtung nach einem der Ansprüche 1 bis 9, das Folgendes umfasst:
(i) Bereitstellen einer ersten leitfähigen Schicht, umfassend eine Vielzahl von Leiterbahnen;
(ii) Aufbringen eines piezoresistiven Materials, umfassend Kohlenstoffnanoteilchen, die in einem Polymer-Matrixmaterial dispergiert sind, auf der ersten leitfähigen Schicht; und
(iii) In-Kontakt-Bringen einer zweiten leitfähigen Schicht mit dem piezoresistiven Material;
**dadurch gekennzeichnet, dass** das piezoresistive Material mehrere Schichten des piezoresistiven Materials umfasst und eine einzelne Schicht aus den mehreren Schichten benachbarte Leiterbahnen innerhalb der ersten leitfähigen Schicht überbrückt und;
die Kohlenstoffnanoteilchen Graphen-Nanoplättchen umfassen.

12. Verfahren nach Anspruch 11, wobei der Schritt des Aufbringens von mehreren Schichten von piezoresistivem Material das Bedrucken mit einer oder mehreren Schichten einer piezoresistiven Tinte umfasst.

13. Verfahren nach Anspruch 11, wobei:
(i) die erste leitfähige Schicht einen ersten Satz aus miteinander verbundenen linearen Leiterbahnen und einen zweiten Satz aus miteinander verbundenen linearen Leiterbahnen umfasst und die Leiterbahnen aus dem ersten und zweiten Satz aus Leiterbahnen fingerartig ineinandergreifen; und/oder
(ii) der Schritt des Bereitstellens einer ersten leitfähigen Schicht das Aufbringen einer leitfähigen Tinte auf ein Substrat beinhaltet; und/oder
(iii) der Schritt des In-Kontakt-Bringens einer zweiten leitfähigen Schicht mit dem piezoresistiven Material das Überlagern eines zweiten Substrats, auf dem die zweite leitfähige Schicht angeordnet ist, auf das erste Substrat umfasst; und/oder
(iv) das Verfahren Folgendes umfasst:
- Herstellen eines unteren Teils durch Bereitstellen einer leitfähigen Schicht und Aufbringen einer oder mehrerer Schichten des piezoresistiven Materials auf die leitfähige Schicht;
und
- In-Kontakt-Bringen eines oberen Teils mit dem unteren Teil, wobei der obere Teil identisch mit dem unteren Teil ist.

## Revendications

1. Dispositif piézorésistif, comprenant un matériau piézorésistif positionné entre une couche conductrice supérieure et une couche conductrice inférieure, dans lequel :
la couche conductrice inférieure comprend une pluralité de tracés conducteurs ; et
le matériau piézorésistif comprend des nanoparticules de carbone dispersées dans un matériau à matrice polymère ;
**caractérisé en ce que** le matériau piézorésistif comprend de multiples couches et **en ce qu'**une couche simple desdites multiples couches relie les tracés conducteurs adjacents à l'intérieur de la couche conductrice inférieure et ;
les nanoparticules de carbone comprennent des nanoplaquettes de graphène.

2. Dispositif piézorésistif selon la revendication 1, dans lequel les tracés conducteurs sont des éléments en relief prévus sur un substrat, avec des canaux intermédiaires entre lesdits éléments en relief, et dans lequel le matériau piézorésistif remplit lesdits canaux.

3. Dispositif piézorésistif selon l'une quelconque des revendications 1 à 2, dans lequel la couche conductrice supérieure comprend une pluralité de tracés conducteurs, et le matériau piézorésistif comble les tracés adjacents à la fois dans la couche conductrice inférieure et la couche conductrice supérieure, ainsi que l'espace entre la couche conductrice inférieure et la couche conductrice supérieure.

4. Dispositif piézorésistif selon la revendication 3, dans lequel l'épaisseur du matériau piézorésistif entre les couches conductrices supérieure et inférieure est inférieure à l'épaisseur du matériau piézorésistif entre les tracés conducteurs adjacents dans la couche conductrice supérieure.

5. Dispositif piézorésistif selon l'une quelconque des revendications 1 à 4, dans lequel la couche conductrice inférieure comprend deux ensembles de tracés conducteurs linéaires qui sont interdigités l'un avec l'autre.

6. Dispositif piézorésistif selon l'une quelconque des revendications 1 à 5, dans lequel soit :
(i) le dispositif comprend en outre un équipement de mesure de la résistance comportant des bornes positive et négative, dans lequel les bornes positive et négative sont connectées aux différents tracés conducteurs dans la couche inférieure.
(ii) les nanoparticules de carbone sont des nanoparticules de carbone fonctionnalisées ; et/ou
(iii) le chargement de nanoparticules de carbone dans le matériau à matrice polymère est inférieur à 50 % en poids, de préférence, inférieur à 20 % en poids, en tant que pourcentage du poids total du matériau piézorésistif.

7. Dispositif piézorésistif selon l'une quelconque des revendications précédentes, dans lequel le matériau piézorésistif comprend trois à six couches.

8. Dispositif piézorésistif selon l'une quelconque des revendications précédentes, dans lequel l'épaisseur du matériau piézorésistif entre la couche conductrice supérieure et la couche conductrice inférieure est inférieure à 300 µm.

9. Dispositif piézorésistif selon la revendication 1, comprenant :
- un substrat inférieur, comprenant ladite couche conductrice inférieure ;
- un substrat supérieur, comprenant ladite couche conductrice supérieure ; et
- ledit matériau piézorésistif positionné entre le substrat supérieur et inférieur, dans lequel le matériau piézorésistif comprend les nanoparticules de carbone dispersées dans le matériau à matrice polymère, et
dans lequel lesdites couches conductrices sur le substrat inférieur et supérieur sont superposées l'une à l'autre, et le matériau piézorésistif remplit sensiblement l'ensemble du volume entre les substrats supérieur et inférieur dans la région où les couches conductrices sont superposées l'une sur l'autre.

10. Capteur de force, comprenant un dispositif piézorésistif selon l'une quelconque des revendications précédentes.

11. Procédé de fabrication d'un dispositif piézorésistif selon l'une quelconque des revendications 1 à 9, comprenant :
(i) la fourniture d'une première couche conductrice comprenant une pluralité de tracés conducteurs ;
(ii) le dépôt d'un matériau piézorésistif, comprenant des nanoparticules de carbone dispersées dans un matériau à matrice polymère, sur la première couche conductrice ; et
(iii) la mise en contact d'une seconde couche conductrice avec le matériau piézorésistif ;
**caractérisé en ce que** le matériau piézorésistif comprend des couches multiples de matériau piézorésistif et **en ce qu'**une couche simple desdites couches multiples comble les tracés conducteurs adjacents à l'intérieur de la première couche conductrice et ;
les nanoparticules de carbone comprennent des nanoplaquettes de graphène.

12. Procédé selon la revendication 11, dans lequel l'étape de dépôt de couches multiples de matériau piézorésistif implique l'impression d'une ou plusieurs couches d'une encre piézorésistive.

13. Procédé selon la revendication 11, dans lequel :
(i) la première couche conductrice comprend un premier ensemble de tracés conducteurs linéaires interconnectés et un second ensemble de tracés conducteurs linéaires interconnectés, et les tracés des premier et second ensemble de tracés sont interdigités ; et/ou
(ii) l'étape de fourniture d'une première couche conductrice implique le dépôt d'une encre conductrice sur un substrat ; et/ou
(iii) l'étape de mise en contact d'une seconde couche conductrice avec le matériau piézorésistif implique la superposition d'un second substrat, ayant la seconde couche conductrice, sur le premier substrat ; et/ou
(iv) le procédé comprend :
- la préparation d'une partie inférieure en prévoyant une couche conductrice et en déposant une ou plusieurs couches dudit matériau piézorésistif sur la couche conductrice ; et
- la mise en contact d'une partie supérieure avec la partie inférieure, dans lequel la partie supérieure est identique à la partie inférieure.
